## Europäisches Patentamt
## European Patent Office
## Office européen des brevets

(11) Numéro de publication: **0 053 994**
**B1**

(12) **FASCICULE DE BREVET EUROPEEN**

(45) Date de publication du fascicule du brevet: **06.11.85**

(51) Int. Cl.⁴: **A 01 D 45/00**

(21) Numéro de dépôt: **81450013.8**

(22) Date de dépôt: **09.12.81**

(54) **Robot ramasseur d'asperges.**

(30) Priorité: **09.12.80 FR 8026502**

(43) Date de publication de la demande:
**16.06.82 Bulletin 82/24**

(45) Mention de la délivrance du brevet:
**06.11.85 Bulletin 85/45**

(84) Etats contractants désignés:
**DE FR GB IT**

(56) Documents cités:
**NL-A-6 814 542**
**NL-A-7 711 510**
**US-A-4 094 238**

**Computer Design vol. 18 no.9 Sept. 79 (p. 78-87)**
**Robotics Today Winter 79-80 p. 2-21-1 à 2-21-4**

(73) Titulaire: **Ecole Nationale Supérieure d'Electricité et de Radioélectricté de Bordeaux E.N.S.E.R.B.**
**U.E.R. dérogatoire de l'Université de Bordeaux I**
**351, Cours de la Libération**
**F-33405 Bordeaux Cedex (FR)**

(72) Inventeur: **Bousseau, Gérard**
**58, rue Charles Gounod**
**F-33400 Talence (FR)**
Inventeur: **Baylou, Pierre**
**66, rue Quintin**
**F-33000 Bordeaux (FR)**
Inventeur: **Mora, André**
**7, rue des Saules**
**F-33170 Gradignan (FR)**
Inventeur: **Monsion, Michel**
**Lieu-dit Ferrand**
**F-33360 Carignan-Latresne (FR)**
Inventeur: **Bouvet, Christian**
**10 Place du Joli Bois**
**F-33170 Canejan (FR)**

(74) Mandataire: **Thébault, Jean-Louis**
**Cabinet Jean-Louis Thébault 50, Cours de Verdun**
**F-33000 Bordeaux (FR)**

Courier Press, Leamington Spa, England.

# Description

La présente invention concerne un robot ramasseur d'asperges, c'est-à-dire un engin autonome capable de repérer les asperges sorties de terre et d'en effectuer la cueillette automatiquement sans aucune intervention humaine.

A l'heure actuelle, dans le domaine agricole, certaines tâches de cueillette ou de ramassage, par exemple, récolte de céréales (blé, maïs etc.), de fourrage, de raisins, sont mécanisées de façon satisfaisante. Pour d'autres tâches, telles que la taille de la vigne, des arbres fruitiers, la récolte de certains fruits de table, le problème reste entier.

Or, l'amélioration de productivité et de la compétitivité passent notamment par un développement de la mécanisation.

Cette mécanisation apparaît de plus en plus nécessaire et inéluctable dans la mesure où l'on rencontre partout des difficultés croissantes d'année en année pour recruter du personnel saisonnier au moment des récoltes et des cueillettes.

Ce genre de problème se pose en particulier pour la récolte des asperges qui est une tâche relativement pénible et dont la rémunération ne peut être en rapport si l'on ne veut pas grever les coûts de revient des cultures d'asperges et rendre ces dernières pratiquement invendables ou non-compétitives.

C'est précisément le but de la présente invention de résoudre un tel problème un réalisant un robot agricole capable de ce substituer à l'homme pour le ramassage des asperges avec une meilleure productivité et pour un coût raisonnable.

A cet effet, l'invention a pour objet un robot ramasseur d'asperges comprenant un châssis mobile, un moyen moteur porté par le châssis, un système de guidage du châssis parallèlement aux buttes de terre des cultures d'asperges, un dispositif mécanique de saisie des asperges, monté sur le châssis et comprenant une pince verticale mobile en translation verticale et en translation horizontale orthogonalement à la direction de déplacement du châssis, un réceptable des asperges cueillies, également porté par le châssis, et un dispositif de détection des asperges à cueillir et de commande du positionnement du dispositif de saisie, ledit robot étant commandé en ce que le dispositif de détection et de commande comportant un système à caméra et un système d'éclairage à contre-jour de la butte de terre en cours de traitement, les deux systèmes étant portés par le châssis et disposés sensiblement dans un plan horizontal à hauteur du sommet de la butte, de part et d'autre de celle-ci, et un système à micro-processeur propre à commander, à partir des images d'une asperge perçues par le système à caméra, d'une part, le déplacement du châssis parallèlement à la butte et, d'autre part, les translations horizontale et verticale de ladite pince en vue d'amener celle-ci au contact de l'asperge détectée puis d'extraire celle-ci du sol pour la placer dans ledit réceptable.

Un dispositif ramasseur de champignons, ayant les caractéristiques techniques d'un robot indiqué dans le préambule de la revendication 1, est décrit dans le document NL—A—68 14542.

Suivant un premier mode de réalisation, le système à caméra comprend une seule caméra, le système à micro-processeur étant chargé de détecter la présence et le passage de l'image de l'asperge perçue par la caméra dans deux zones prédéterminées du champ de vision de la caméra, de déterminer à partir de ces deux détections les coordonnées spatiales de l'asperge et d'envoyer des signaux en conséquence au moteur de commande du déplacement du robot et aux moteurs de commande des translations horizontale et verticale de la pince de saisie, en vue d'arrêter le robot au droit de l'asperge, d'extraire celle-ci, puis de remettre en marche le robot à une vitesse prédéterminée.

Un tel système à micro-processeur comprend, par exemple, un générateur d'impulsions de synchronisation relié à la caméra, un premier et un second générateur de fenêtres de détection en deux zones du champ de vision de la caméra, les deux générateurs étant reliés audit générateur de synchronisation, un premier et un second détecteur de la présence d'une image de l'asperge dans l'une et l'autre respectivement des deux fenêtres susdites, les deux détecteurs étant reliés à leur générateur de fenêtre respectif et à al caméra à travers un circuit de mise en forme et de traitement des images perçues par la caméra, un circuit de calcul du déplacement du robot recevant les signaux de sortie des deux détecteurs de présence susdits, ledit circuit de calcul commandant, d'une part, le moteur de déplacement du robot et, d'autre part, les moteurs de translations horizontale et verticale de la pince de saisie par l'intermédiaire d'un circuit de calcul des coordonnées horizontale et verticale de l'asperge et un circuit de commande desdits moteurs de translation.

Suivant un second mode de réalisation, le système à caméra comprend deux caméras disposées côte à côte, la première caméra étant une caméra à grand champ et à faible rémanence et la seconde caméra étant une caméra à champ étroit, le système à micro-processeur étant chargé de détecter la pénétration dans le champ de vision de la première caméra de l'asperge, puis le passage de celle-ci dans l'axe de vision de la seconde caméra alors que l'asperge se trouve toujours dans le champ de vision de ladite première caméra et, à partir de ces deux détections, de commander le positionnement du robot de façon que ladite asperge soit dans l'axe de vision de la seconde caméra et de déterminer les coordonnées spatiales de l'asperge en vue d'envoyer des signaux en conséquence aux moteurs de commande des translations horizontale et verticale de la pince de saisie, afin d'extraire l'asperge, puis de remettre en marche le robot à une vitesse prédéterminée.

Un tel système à micro-processeur comprend, par exemple un circuit de calcul du déplacement du robot relié à chacune des deux caméras par l'intermédiaire d'un circuit de mise en forme et de traitement des images perçues par la caméra associée, ledit circuit de calcul commandant, d'une part, le moteur de déplacement du robot et, d'autre part, les moteurs de translations horizontale et verticale de la pince de saisie par l'intermédiaire d'un circuit de calcul des coordonnées horizontale et verticale de l'asperge et un circuit de commande desdits moteurs de translation.

D'autre caractéristiques et avantages des éléments essentiels du robot selon l'invention et en particulier des systèmes à caméra et des systèmes de traitement associés définis ci-dessus, ressortiront de la description qui va suivre, description donnée à titre d'exemple uniquement et en regard des dessins annexés sur lesquels:

— Fig. 1 représente schématiquement une vue en perspective d'un robot selon l'invention enjambant une butte de culture d'asperges;
— Fig. 2 représente schématiquement en vue de dessus la disposition du système à caméra et du système d'éclairage à contre-jour de part et d'autre de la butte d'asperges;
— Fig. 3 représente l'image d'une asperge perçue par une caméra du robot;
— Fig. 4 représente le schéma du système de détection des asperges;
— Fig. 5 illustre le mode de calcul des coordonnées spatiales d'une asperge détectée;
— Fig. 6 représente la localisation des deux fenêtres de détection dans le champ de vision de la caméra du système de la Fig. 4;
— Fig. 7 illustre une variante de réalisation du système de détection à l'aide de deux caméras;
— Fig. 8 et 9 illustrent les champs de vision des deux caméras de la Fig. 7;
— Fig. 10 représente très schématiquement le système à détection à deux caméras;
— Fig. 11 représente schématiquement en coupe verticale transversale un mode d'implantation de capteurs de guidage de l'engin le long de la butte d'asperges;
— Fig. 12 représente une vue de dessus de dispositif schématisé sur la Fig. 11, et
— Fig. 13 représente le schéma fonctionnel du système de guidage illustré par les Fig. 11 et 12.

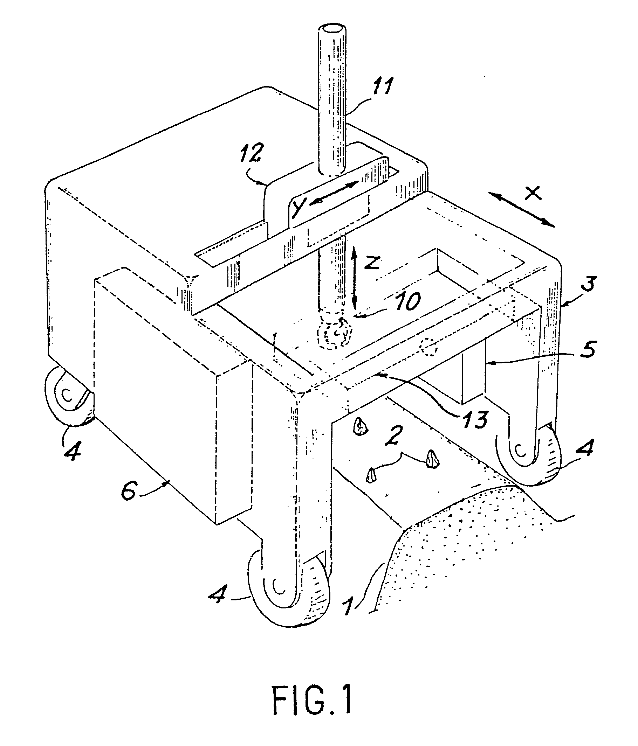

La Fig. 1 représente très schématiquement un prototype de réalisation d'un robot de ramassage d'asperges selon l'invention.

Ce robot est constitué d'un mobile susceptible de se déplacer à cheval au dessus d'une butte 1 de culture d'asperges dont on a représenté en 2 quelques pointes ou turions dépassant de la surface du sol au sommet de la butte 1.

Dans le mode de réalisation schématisé sur la Fig. 1, le mobile en question est constitué d'un châssis enjambeur 3 porté par quatre roues 4, dont deux par exemple (à l'avant ou à l'arrière du robot) sont motrices et entraînées à partir d'un ou deux moteurs embarqués non représentés sur le dessin. Il peut s'agir, à titre d'exemple, de moteurs électriques montés, ainsi que leur source d'énergie électrique, sur le châssis 3 du robot.

Sur les deux flancs verticaux du châssis 3 sont montés, se faisant vis-à-vis, un système à caméra 5 et un dispositif d'éclairage à contre-jour 6.

Les deux dispositifs 5 et 6 sont placés de part et d'autre de la butte 1 sensiblement dans l'alignement avec le sommet de la butte.

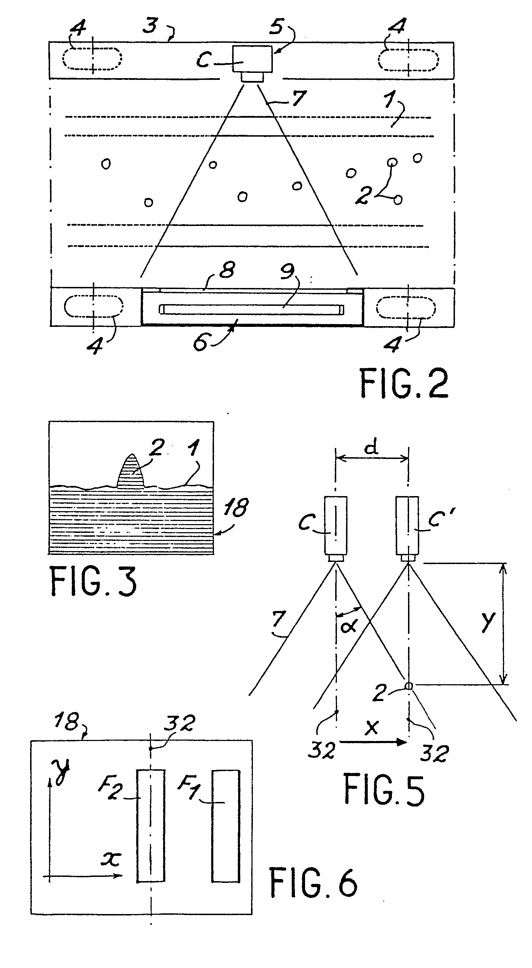

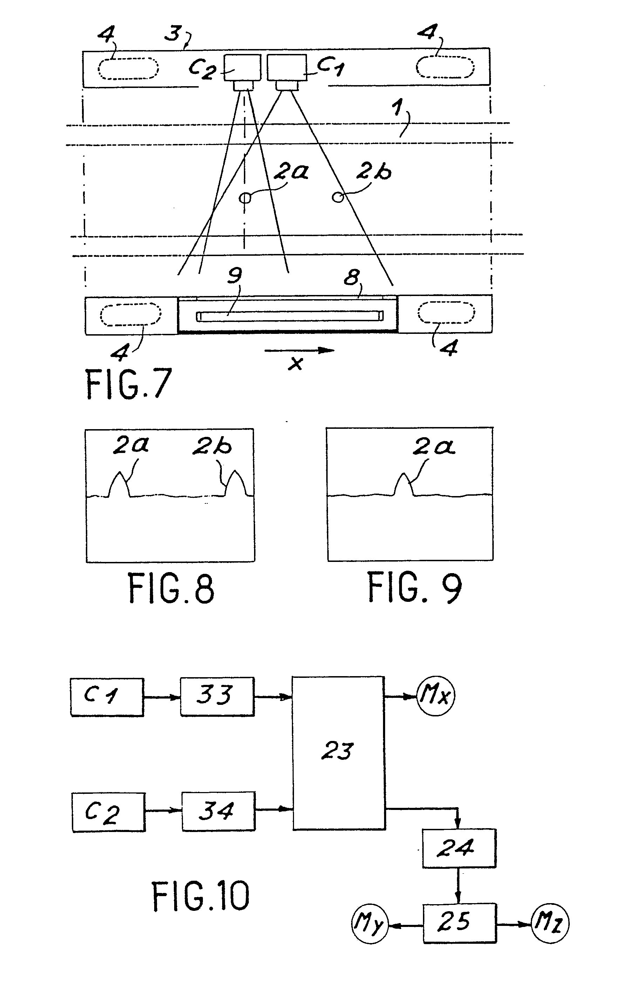

Suivant un premier mode de réalisation, le système à caméra 5 comporte une seule caméra C dont on a schématisé en 7 sur les Fig. 2 et 5 le champ de vision. Ce champ de vision couvre sensiblement la surface d'un écran translucide 8 éclairé par derrière par une source lumineuse telle qu'un tube 9 enfermé dans une boîte à lumière.

Le robot comporte, en outre, un organe de saisie des asperges constitué par exemple par une pince verticale schématisée en 10.

La pince 10 est fixée à l'extrémité d'une crémaillère verticale 11 mobile suivant l'axe vertical Z à l'aide par exemple d'un moteur électrique porté par un chariot 12 support de la pince 10.

Le chariot 12 peut se déplacer en translation suivant une direction Y orthogonale à la fois à la direction Z et à la direction X de déplacement du robot, laquelle est parallèle bien entendu à l'axe de la butte 1.

A cet effet, le chariot 12 peut, à titre d'exemple, se mouvoir à l'aide d'une ou deux vis horizontales parallèles à l'axe Y, portées par le châssis 3 et entraînées en rotation par un moteur électrique, le chariot 12 étant solidaire de noix coopérant avec lesdites vis. Les moyens d'entraînement et de guidage de la crémaillère 11 et du chariot 12 étant tout-à-fait conventionnels n'ont pas besoin d'être décrits et représentés plus en détails.

Quant à la pince 10, elle peut être constituée par exemple par deux palettes antagonistes susceptibles de se déplacer en direction l'une de l'autre sous l'action d'un moyen moteur tel qu'un électro-aimant, en vue de saisir les asperges et de les extraires du sol pour les déposer ensuite dans un réceptacle 13 porté par le robot.

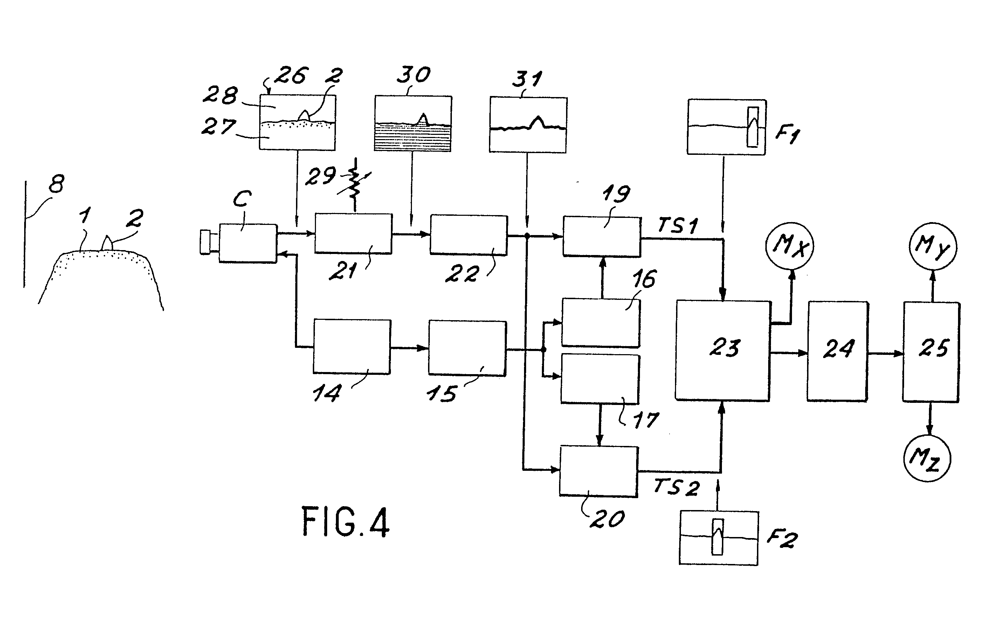

Les moteurs de commande de l'avancement du robot (direction X), du déplacement horizontal (direction Y) de la pince 10, du déplacement vertical (direction Z) de celle-ci et d'actionnement de la pince 10 sont commandés automatiquement à partir des informations recueillies par la caméra C à l'aide d'un système à micro-processeur qui va être maintenant décrit en référence aux Fig. 3 à 6 et, plus particulièrement, à la Fig. 4.

Sur cette Fig. 4 on a symbolisé en 8 l'écran lumineux. Le système micro-processeur de traitement des informations captées par la caméra C comprend un générateur 14 d'impulsions de synchronisation ou horloge, relié à la caméra.

Le générateur 14 est également relié, via un circuit 15 de calcul des coordonnées, à deux générateurs de fenêtres 16 et 17.

L'un de ces générateurs 16 est chargé de délimiter le contour d'une première fenêtre F1 située dans une première zone du champ de vision de la caméra C schématisé par le rectangle 18 de la Fig. 6, cependant que le second générateur 17 est chargé d'élaborer une seconde fenêtre F2 identique à la première, mais située dans une seconde zone dudit champ de vision.

Chaque générateur 16, 17 est relié à un détecteur de présence d'une asperge respectivement 19 et 20.

Les deux détecteurs 19 et 20 sont reliés en parallèle à la caméra C par l'intermédiaire d'un circuit de mise en forme et de traitement des images comprenant un circuit de binarisation 21 et un circuit d'extraction de contours 22.

La sortie des détecteurs 19 et 20 est envoyée sur un circuit 23 de calcul du déplacement du robot commandant, d'une part, le moteur Mx de déplacement du robot et, d'autre part, les moteurs My et Mz de translation horizontale et verticale de la pince 10 par l'intermédiaire d'un circuit 24 de calcul des coordonnées (suivant les directions Y et Z) de l'asperge détectée et d'un circuit 25 de commande desdits moteurs My et Mz.

L'alimentation en énergie des différents circuits provient de la source d'énergie électrique embarquée sur le robot, l'ensemble du système à micro-processeur étant, bien entendu, monté sur le châssis 3.

Le fonctionnement du système à micro-processeur décrit ci-dessus est le suivant.

La caméra C et l'écran lumineux 8 d'éclairage à contre-jour sont disposés de façon que la caméra C voit dans son champ de vision (Fig. 3) le sommet de la butte 1 sensiblement dans sa partie horizontale médiane.

L'intérêt de l'éclairage à contre-jour réside dans l'affranchissement des conditions d'éclairage externes, le robot pouvant ainsi travailler de jour comme de nuit quel que soit l'éclairement. On a ainsi des images contrastées en permanence.

Lorsqu'un turion d'asperge 2 entre dans le champ de la caméra C, celle-ci perçoit l'image 26 de la Fig. 4 sur laquelle on distingue une partie inférieure sombre 27 et une partie supérieure claire 28 et le turion 2.

Grâce au circuit de binarisation 21 à seuil réglable en 29, l'image 26 est transformée en image 30 en noir et blanc seulement. Enfin, le circuit 22 d'extraction des contours construit (image 31) le profil du sommet de la butte 1 à partir de la frontière noir/blanc de l'image binarisée 30. C'est cette dernière image 31 qui est analysée par les détecteurs 19 et 20.

Le générateur d'impulsions 14 permet de calculer en 15 les coordonnées en X et en Y (Fig. 6) des points du champ de vision 18 de la caméra C explorés et génère également les tops de synchronisation de commande de la caméra.

Le détecteur 19 ne prend en compte que la partie de l'image 31 en regard de la fenêtre F1 généré par 16 et le détecteur 20 en fait autant vis-à-vis de la fenêtre F2, les dimensions et emplacements des fenêtres F1 et F2 dans le champ de vision de la caméra étant définis par le circuit 15.

La fenêtre F1 est positionnée à la frontière du champ de vision 18 du côté où surgit l'image du turion 2 lorsque le robot, en se déplaçant (flèche X, Fig. 5), arrive à hauteur de l'asperge.

On a représenté en C sur la Fig. 5 la position de la caméra au moment où l'image du turion 2, en pénétrant dans le champ de vision de la caméra, va se trouver dans la fenêtre F1.

La fenêtre F2 est positionnée sur le plan de symétrie vertical 32 du champ de vision.

On a représenté en C' sur la Fig. 5 la position de la caméra au moment où l'image du turion passe dans ledit plan 32 et se trouve dans la fenêtre F2.

Le passage de l'image du turion dans la fenêtre F1 génère le signal TS1 par le détecteur 19, puis le passage de cette même image dans la fenêtre F2 génère le signal TS2 par le détecteur 20.

A l'aide des signaux TS1 et TS2 le circuit 23 calcule, compte tenu de la vitesse de déplacement du robot, la distance d séparant les positions C et C' de la caméra.

Le circuit 24 calcule à l'aide de cette distance d la coordonnée Y du turion 2 puisque $Y = d \cdot \tan\alpha$, $\alpha$ étant le demi-angle de champ de la caméra.

Le circuit 23 commande l'arrêt immédiat du moteur Mx de déplacement du robot cependant que le circuit 25 commande la translation en Y du chariot 12 afin d'amener la pince 10 à l'aplomb du turion, puis la translation en Z de la pince 10 pour aller chercher le turion.

Le réglage de la commande du moteur Mx est évidemment déterminé de façon que le robot s'arrête effectivement avec sa pince 10 dans le plan vertical YZ passant sensiblement par le centre du turion.

La longueur de la course de descente Z de la pince 10, bien qu'étant réglable, est déterminée a priori au départ du robot et ne se modifie pas d'elle-même par la suite.

Le système à micro-processeur commande également bien entendu le redémarrage du robot dès l'asperge cueillie et son déplacement à une vitesse pré-affichée.

Des détecteurs de fin de course associés à la crémaillère 11 assurent l'actionnement de la pince 10 en position basse pour saisir l'asperge après avoir pénétré dans la terre d'une certaine distance en entourant l'asperge, puis en position haute pour laisser tomber par gravité l'asperge cueillie dans le réceptacle 13 par l'intermédiaire par exemple d'une goulotte escamotable (non représentée) canalisant ladite asperge vers le réceptacle situé à l'écart de la trajectoire de la pince.

Le système à micro-processeur peut être programmé de façon à ne prendre en compte que les turions d'un calibre minimum prédéterminé et éventuellement à sélectionner par calibre les asperges en filtrant convenablement les images reçues par les circuits de détection 19 et 20, cette pré-sélection au niveau des images commandant l'envoi des asperges cueillies dans des compartiments distincts du réceptacle 13 en fonction de leur calibre.

Le robot procède ainsi de manière autonome et entièrement automatique à la cueillette systématique de tous les turions qu'il rencontrera dans son champ de vision tout le long de la butte.

A cet effet, il faut prévoir un système d'auto-guidage le long de la butte et, éventuellement, à l'extrémité de celle-ci, d'auto-alignement avec la butte suivante pour traiter celle-ci ainsi que les suivantes sans aucune intervention extérieure manuelle. L'auto-guidage peut, par exemple, être obtenu par détection des flancs de la butte de terre par des palpeurs ou par ultra-sons.

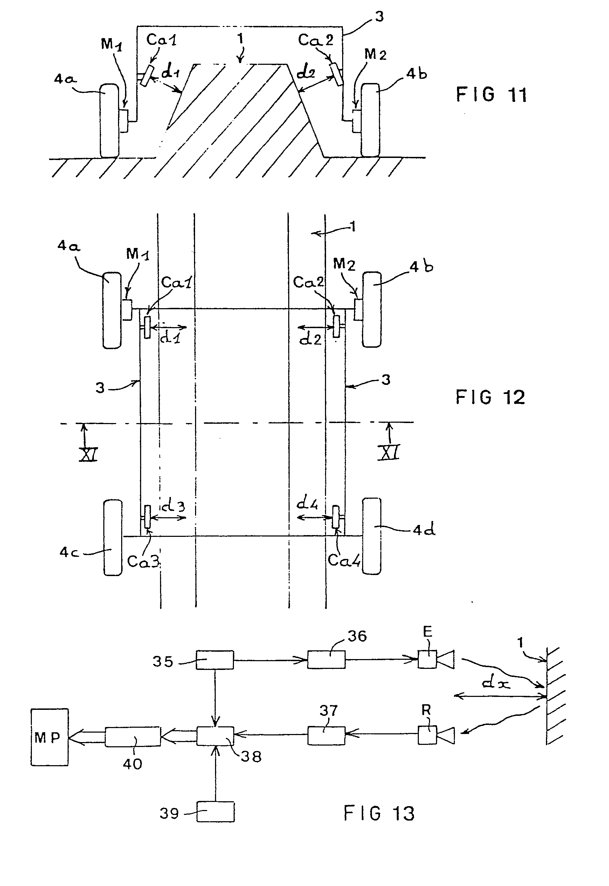

On a schématisé un tel dispositif de guidage à palpeurs ultrasonores sur les Fig. 11 et 12, le schéma fonctionnel de ce dispositif étant représenté sur la Fig. 13.

Sur les Fig. 11 et 12, le châssis du robot est schématisé en 3 et repose sur quatre roues 4a, 4b, 4c et 4d, non directrices, les deux roues avant (4a, 4b) étant mues indépendamment l'une de l'autre par exemple par un moteur électrique intégré dans le moyeu (M1 et M2).

Les deux roues arrière 4c, 4d sont folles. L'orientation de l'engin est assurée en donnant aux moteurs M1, M2 des vitesses de rotation différentes.

Dans le mode de réalisation des Fig. 11 et 12, il est prévu quatre capteurs (Ca1 à Ca4) de type ultrasonore comportant chacun un émetteur et un récepteur. Ces quatre capteurs sont montés sur le châssis 3 au droit des quatre roues et font face aux flancs de la butte 1. Ils sont séparés des flancs respectifs de la butte par des distances d1, d2, d3 et d4 qui normalement, lorsque le robot est correctement positionné par rapport à la butte, sont égales.

La Fig. 13 illustre le schéma fonctionnel des capteurs. Chaque capteur comprend un émetteur E d'ondes ultrasonores sollicité à partir d'un générateur d'impulsions 35, par l'intermédiaire d'un amplificateur 36. L'émetteur E se trouve à une certaine distance dx du flanc de la butte 1. Celle-ci renvoie l'onde ultrasonore en direction d'un récepteur R placé à la même distance dx.

Le récepteur R délivre par l'intermédiaire d'un amplificateur 37 un signal de même fréquence que celui adressé par le générateur 35 à l'émetteur E. Ce signal est envoyé sur un compteur 38 également relié au générateur 35, ainsi qu'à une horloge 39 de comptage.

Enfin, le compteur 38 est relié par un circuit d'interface 40 approprié au micro-processeur MP du robot.

Un tel dispositif de mesure du temps de vol aller et retour d'une impulsion acoustique ultrasonore est bien connu et n'a pas besoin d'être décrit plus en détail.

Le temps T séparant le train d'impulsions émis par E du train d'impulsions reçu par R est

$$T = \frac{2dx}{C},$$

C étant la célérité du son dans l'air.

Ce temps T est converti numériquement grâce au compteur 38 comptant les impulsions délivrées par l'horloge 39 depuis l'instant d'émission jusqu'à l'instant de retour du train d'ondes ultrasonores.

La fréquence du signal émis est de l'ordre de 40KHz et peut être modifié éventuellement s'il n'y a pas d'écho ou si ce dernier n'est pas exploitable.

Le contenu du compteur 38 est lu par le micro-processeur qui est capable de traduire en distance capteur/réflecteur ce contenu.

Le microprocesseur connaissant les distances d1, d2, d3, d4 en déduit les vitesses de rotation à obtenir des moteurs M1 et M2 pour que l'engin maintienne ou retrouve une position correcte par rapport à la butte 1.

Les vitesses de rotation des moteurs M1 et M2 se traduisent en vitesse de déplacement V1 et V2 des roues avant 4a, 4b du robot.

Ces vitesses sont voisines d'une vitesse dite Vo constituant la vitesse de croisière de l'engin.

La correction de vitesse autour de Vo se réalise en tenant compte des mesures des distances d1, d2, d3, d4 suivant l'algorithme:

$$\Delta V = \text{Vitesse de M1} - \text{Vitesse de M2} = a(d1-d2)+b(d3-d4)$$

Les coefficients a et b sont établis (signe et module) en fonction des dimensions de l'engin, de la vitesse Vo et de la rapidité de réaction souhaitée de la part de l'engin.

L'algorithme ci-dessus peut être de forme différente et faire intervenir des butées pour empêcher que chacune des distances d1, d2, d3, d4 ne descende en dessous d'un seuil de sécurité en deçà duquel l'engin heurterait la butte 1.

Les capteurs peuvent être en nombre différents et placés d'une autre façon sur le robot. Ils peuvent ainsi être tous placés à l'avant et réduits au nombre minimal de 2.

Afin d'éviter certains inconvénients dans le fonctionnement des capteurs si leur distance à la butte est trop faible, on peut alimenter séquentiellement ces capteurs ou les faire fonctionner à des fréquences différentes.

En outre les mesures des distances peuvent être filtrées par le système informatique du robot qui élimine les mesures s'écartant trop des valeurs attendues.

Enfin, il est possible d'utiliser les capteurs ultrasonores en régime continu en non plus impulsionnel comme décrit ci-dessus. Il s'agit alors d'une modulation en amplitude de l'onde ultrasonore par un signal qui présentera un déphasage entre l'émission et la réception.

Le fin de la butte 1 est détectée par l'absence d'écho sur les capteurs.

Le microprocesseur de l'engin est programmé de façon à élaborer alors des signaux de commande aux moteurs M1 et M2 tels que l'engin décrive un demi-cercle de rayon R=D/2, D étant l'espacement inter-buttes de façon à se positionner correctement devant l'extrémité de la butte suivante et reprendre son travail.

Des erreurs de déplacement ou déport dues aux glissements de l'engin ou aux imperfections de la commande sont permises dans la limite des tolérances acceptées par la structure mécanique de l'engin par rapport aux largeurs des buttes.

Toutefois, afin d'améliorer la précision de mise en place du robot dans l'axe de la butte suivante, on peut avantageusement munir l'engin d'un capteur de positionnement absolu. Par exemple, un compas magnétique peut être utilement employé pour connaître l'angle entre l'axe de l'engin et la direction du nord magnétique. Le contrôle de la rotation de 180° du robot à l'extrémité d'une butte en vue de prendre en charge la butte suivante est donc possible par le microprocesseur embarqué.

Les Fig. 7 à 10 illustrent un second mode de réalisation du système de détection des asperges.

Suivant cette variante, le système à caméra 5 comporte deux caméras C1 et C2 côte à côte.

La caméra C1 (la première suivant le sens de deplacement X du robot) est une caméra à grand champ possédant une faible rémanence de façon à obtenir des images satisfaisantes avec des vitesses de déplacement du robot élevées (de l'ordre de 1m/s).

La seconde caméra C2 a un champ plus faible.

Les caméras C1 et C2 sont reliées au circuit 23 de calcul du déplacement du robot commandant le moteur Mx du robot et les moteurs My et Mz de l'outil de cueillette via les circuits 24 et 25, lesdits circuits 23, 24 et 25 étant analogues à ceux de la Fig. 4.

Les circuits 33 et 34 interposés entre les caméras C1 et C2 et le circuit 23 remplissent les mêmes fonctions que les circuits 21 et 22 de la Fig. 4.

Ces circuits 33—34 regroupent donc chacun un circuit de binarisation suivi d'un circuit d'extraction de contour.

Le fonctionnement des circuits 33—34 ne sera pas exposé car il est strictement identique à celui desdits circuits 21—22.

Le système à micro-processeur de la Fig. 10 traite en temps réel les images issues des caméras C1 et C2 et calcule les coordonnées des différents turions situés dans le champ de vision commun aux deux caméras (vision stéréoscopique).

La première caméra C1 à grand champ de vision permet de détecter la présence d'une asperge lorsqu'un turion entre dans son champ (position du turion 2b sur la Fig. 8) et d'amorcer, dès cet instant, la décélération du robot afin que l'asperge pénètre dans le champ de vision de la caméra C2 avec une vitesse faible. Puis, dès que l'asperge se trouve dans l'axe de la caméra C2 (position du turion 2a sur la Fig. 9) le robot est aussitôt arrêté.

Si, à l'arrêt du robot, l'image de l'asperge n'est pas correctement située au centre de l'image fournie par la caméra C2, un déplacement du robot peut être commandé pour parfaire le positionnement de l'image de l'asperge.

Des que ce positionnement correct sur l'image fournie par la caméra C2 est réalisé, la position de l'image de cette même asperge sur l'image fournie par la caméra C1 permet de déduire par un calcul simple les coordonnées du turion (vision stéréoscopique). Les circuits 24 et 25 élaborent alors les ordres de commande des moteurs de déplacement de l'outil 10 lequel se trouve dans l'axe de vision de la caméra C2 dont le champ de vision étroit permet une localisation précise du turion.

Par ailleurs, dans ce second mode de réalisation, comme dans le premier, il est possible de détecter la présence de plusieurs asperges côte à côte se trouvant dans le champ de vision de la ou des caméras grâce à une mémorisation des signaux de détection.

Bien entendu, l'invention n'est pas limitée aux modes de réalisation représentés et décrits ci-dessus mais en couvre au contraire toutes les variantes non seulement pour ce qui concerne le système à micro-processeur lui-même mais également pour ce qui concerne les éléments mécaniques du robot, ses moyens de propulsions et de guidage et l'outil de cueillette dont l'agencement et le fonctionnement peuvent varier sans que l'on sorte pour autant du cadre de la présente invention, telle que définie par les revendications.

**Revendications**

1. Robot ramasseur d'asperges du type comprenant un châssis mobile (3), des moyens pour déplacer et guider le châssis parallèlement aux buttes de terre (1) de cultures d'asperges, un dispositif de saisie des asperges mobile en translation verticale et en translation horizontale orthogonalement à la direction de déplacement du châssis et un dispositif de détection des asperges à cueillir et de commande du positionnement du dispositif de saisie, ledit robot étant caractérisé en ce que le dispositif de détection et de commande comporte un système à caméra (5) et un système (6) d'éclairage à contrejour de la butte de terre (1) en cours de traitement, les deux systèmes étant portés par le châssis et disposés sensiblement dans un plan horizontal à hauteur du sommet de la butte, de part et d'autre de celle-ci, et un système à micro-processeur propre à commander, à partir des images d'une asperge (2) perçues par le système à caméra (5), d'une part, le déplacement du châssis (3) parallèlement à la butte (1) et, d'autre part, les translations horizontale Y et verticale Z d'une pince de saisie (10) en vue d'amener celle-ci au contact de l'asperge détectée puis d'extraire celle-ci du sol pour la placer dans un réceptacle (13).

2. Robot suivant la revendication 1 caractérisé en ce que le système à caméra (5) comprend une seule caméra C, le système à micro-processeur étant chargé de détecter la présence et le passage de l'image de l'asperge (2) perçue par la caméra C dans deux zones prédéterminées du champ de vision (18) de la caméra, de déterminer à partir de ces deux détections les coordonnées spatiales de l'asperge (2) et d'envoyer des signaux en conséquence au moteur de commande de déplacement (Mx) du robot et aux moteurs de commande (My, Mz) des translations horizontale et verticale de la pince de saisie (10) en vue d'arrêter le robot au droit de l'asperge, d'extraire celle-ci, puis de remettre en marche le robot à une vitesse prédéterminée.

3. Robot suivant la revendication 2, caractérisé en ce que ledit système à micro-processeur comprend un générateur (14) d'impulsions de synchronisation relié à la caméra (C), un premier (16) et un second (17) générateur de fenêtres de détection (F1 et F2) en deux zones du champ de vision (18) de la caméra, les deux générateurs étant reliés audit générateur de synchronisation, un premier (19) et un second (20) détecteur de la présence d'une image de l'asperge dans l'une et l'autre respectivement des deux fenêtres susdites, les deux détecteurs (19, 20) étant reliés à leur générateur de fenêtre respectif (16, 17) et à la caméra (C) à travers un circuit (21, 22) de mise en forme et de traitement des images perçues par la caméra, un circuit (23) de calcul du déplacement du robot recevant les signaux de sortie des deux détecteurs de présence (19, 20) susdits, ledit circuit de calcul (23) commandant, d'une part, le moteur (Mx) de déplacement du robot et, d'autre part, les moteurs (My, Mz) de commande des translations horizontale et verticale de la pince de saisie (10) par l'intermédiaire d'un circuit (24) de calcul des coordonnées horizontale et verticale de l'asperge (2) et un circuit (25) de commande desdits moteurs de translation.

4. Robot suivant la revendication 3 caractérisé en ce que la première fenêtre (F1) de détection est positionnée sur le bord avant, suivant le sens de déplacement (X) du robot, du champ de vision (18) de la caméra (C), cependant que la seconde fenêtre (F2), de même caractéristiques que la première, est positionnée dans le plan vertical axial (32) dudit champ de vision, les coordonnées desdites fenêtres étant définies par un circuit de calcul (15) à partir du générateur d'impulsions (14).

5. Robot suivant la revendication 1, caractérisé en ce que le système à caméra (5) comprend deux caméras (C1, C2) disposés côte à côte, la première caméra (C1) étant une caméra à grand champ et à faible rémanence et la seconde caméra (C2) étant une caméra à champ étroit, le système à micro-processeur étant chargé de détecter la pénétration dans le champ de vision de la première caméra (C1) de l'asperge, puis le passage de celle-ci dans l'axe de vision de la seconde caméra (C2) alors que l'asperge se trouve toujours dans le champ de vision de ladite première caméra (C1) et, à partir de ces deux détections de commander le positionnement du robot de façon que ladite asperge soit dans l'axe de vision de la seconde caméra (C2) et de déterminer les coordonnées spatiales de l'asperge en vue d'envoyer des signaux en conséquence aux moteurs (My, Mz) de commande des translations horizontale et verticale de la pince de saisie (10), afin d'extraire l'asperge puis de remettre en marche le robot à une vitesse prédéterminée.

6. Robot suivant la revendication 5, caractérisé en ce que le système à micro-processeur comprend un circuit (23) de calcul du déplacement du robot relié à chacune des deux caméras (C1 et C2) par l'intermédiaire d'un circuit de mise en forme et de traitement des images perçues par la caméra associée, ledit circuit de calcul (23) commandant, d'une part, le moteur (Mx) de déplacement du robot et, d'autre part, mes moteurs (My, Mz) des translations horizontale et verticale de la pince de saisie (10) par l'intermédiaire d'un circuit (24) de calcul des coordonnées horizontale et verticale de l'asperge et un circuit (25) de commande desdits moteurs de translation.

7. Robot suivant l'une des revendications 1 à 6, caractérisé en ce que la pince de saisie (10) est fixée à l'extrémité inférieure d'une crémaillère verticale (11) mue par un moteur, l'ensemble étant porté par un chariot (12) mû perpendiculairement à la direction de déplacement (X) du robot.

8. Robot suivant l'une des revendications 1 à 7 caractérisé en ce que ledit système d'éclairage à contrejour (6) est constitué par un écran translucide (8) perpendiculaire à l'axe du système à caméra (5) et un moyen d'éclairage (9) disposé derrière l'écran.

9. Robot suivant l'une des revendications 1 à 8, caractérisé en ce que le moyen de déplacement du robot est constitué par deux moteurs électriques (M1, M2) entraînant chacun l'une des deux roues avant (4a, 4b) et en ce qu'il comporte un système d'autoguidage le long de la butte (1) constitué d'au moins deux capteurs ultrasonores (Ca1, Ca2) disposés de part et d'autre de la butte (1) en regard de chacun des flancs de celle-ci, lesdits capteurs étant chargés de mesurer la distance les séparant de la butte et de commander en conséquence par l'intermédiaire dudit système à microprocesseur (MP) la vitesse respective de chacun desdits moteurs (M1, M2) en vue de conserver au robot un alignement correct avec la butte.

10. Robot suivant la revendication 9 caractérisé en ce qu'il comporte quatre capteurs ultrasonores (Ca1 à Ca4) disposés sensiblement au droit des quatre roues (4a à 4d) de l'engin.

11. Robot suivant l'une des revendications 1 à 10 caractérisé en ce qu'il comporte un compas magnétique ou analogue permettant de connaître l'orientation de l'engin par rapport à l'axe de la butte (1) d'asperge et de commander par l'intermédiaire dudit système à microprocesseur la rotation à 180° de l'engin à la fin d'une butte en vue de s'aligner sur l'extrémité de la butte suivante.

**Patentansprüche**

1. Spargelernteroboter der Bauart umfassend ein bewegliches Chassis (3), Mittel zum Bewegen und Führend des Chassis parallel zu den Hügeln (1) von Spargelkulturen, eine Spargelaufnehmvorrichtung, die translatorisch vertikal beweglich ist und translatorisch horizontal beweglich senkrecht zur Bewegungsrichtung des Chassis ist, und eine Vorrichtung zum Erfassen der zu stechenden Spargel und zum Steuern der Positionierung der Aufnahmevorrichtung, welcher Roboter dadurch gekennzeichnet ist, daß die Vorrichtung zum Erfassen und Steuern ein Kamerasystem (5) und ein Gegenlichtbeleuchtungssystem (6) der Erdhügel (1) bei der Bearbeitung umfaßt, welche beiden Systeme von dem Chassis getragen sind und im wesentlichen in einer Horizontalebene in Höhe des Hügelkammes beidseits desselben angeordnet sind, sowie ein Mikroprozessorsystem zum Steuern, ausgehend von durch das Kamerasystem (5) empfangenen Bildern eines Spargels (2) einerseits der Bewegung des Chassis (3) parallel zu dem Hügel (1) und andererseits der horizontalen Translation Y und vertikalen Translation Z eines Aufnahmegreifers (10), um diesen in Kontakt mit dem erfaßten Spargel und danach zum Extrahieren desselben aus dem Boden zwecks Überführung in einen Behälter (13) zu bewegen.

2. Roboter nach Anspruch 1, dadurch gekennzeichnet, daß das Kamerasystem (5) eine einzige Kamera C umfaßt, wobei das Mikroprozessorsystem ausgebildet ist zum Feststellen des Vorhandenseins und des Durchlaufs des Bildes des Spargels (2), empfangen von der Kamera C in zwei vorgegebenen Zonen des Kamerasichtfeldes (18) zum Bestimmen, ausgehend von diesen beiden Erfassungen, der räumlichen Koordinaten des Spargels (2) und zum Übertragen von entsprechenden Signalen an den Steuermotor (Mx) für die Bewegung des Roboters und zu Steuermotoren (My, Mz) der Horizontaltranslation und Vertikaltranslation des Aufnahmegreifers (10), um den Roboter am Ort des Spargels anzuhalten, diesen zu extrahieren und dann den Roboter wieder mit einer vorgegebenen Geschwindigkeit in Gang zu setzen.

3. Roboter nach Anspruch 2, dadurch gekennzeichnet, daß das Mikroprozessorsystem einen Synchronisationsimpulsgenerator (14) umfaßt, angeschlossen an die Kamera (C), einen ersten (16) und einen zweiten (17) Erfassungsfenstergenerator (F1 bzw. F2) in zwei Zonen des Sichtfeldes (18) der Kamera, wobei die beiden Generatoren an den genannten Synchronisationsgenerator angeschlossen sind, einen ersten (19) und einen zweiten (20) Detektor für das Vorhandenseins eines Bildes des Spargels in dem einen bzw. anderen der beiden oben genannten Fenster, wobei die beiden Detektoren (19, 20) an ihren jeweiligen Fenstergenerator (16, 17) und die Kamera (C) über einen Schaltkreis (21, 22) zur Umformung und Verarbeitung der von der Kamera empfangenen Bilder angeschlossen sind, einen Berechnungsschaltkreis (23) für die Bewegung des Roboters, welcher Ausgangssignale der beiden oben genannten Detektoren (19, 20) für das Vorhandensein empfängt, wobei der genannte Berechnungsschaltkreis (23) einerseits den Bewegungsmotor (Mx) des Roboters steuert und andererseits die Motoren (My, Mz) für das Steuern der Horizontal- und Vertikaltranslationen des Aufnahmegreifers (10) über einen Berechnungsschaltkreis (24) für die Horizontal- und Vertikalkoordinaten des Spargels (2) sowie einen Schaltkreis (25) für die Steuerung der genannten Translationsmotoren steuert.

4. Roboter nach Anspruch 3, dadurch gekennzeichnet, daß das erste Erfassungsfenster (F1) an der in Bewegungsrichtung (X) des Roboters gesehenen vorderen Kante des Sichtfeldes (18) der Kamera (C) positioniert ist, während das zweite Fenster (F2), mit gleichen Kennwerten wie das erste, in der axialen Vertikalebene (32) des genannten Sichtfeldes positioniert ist, wobei die Koordinaten der genannten Fenster definiert sind durch einen Berechnungsschaltkreis (15) ausgehend von dem Impulsgenerator (14).

5. Roboter nach Anspruch 1, dadurch gekennzeichnet, daß das Kamerasystem (5) zwei Kameras (C1, C2) umfaßt, die nebeneinander angeordnet sind, wobei die erste Kamera (C1) eine Breitfeldkamera mit geringer Remanenz ist und die zweite Kamera (C2) eine Engfeldkamera ist, wobei das Mikroprozessorsystem ausgebildet ist zum Erfassen des Eindringens des Spargels in das Sichtfeld der ersten Kamera und danach des Durchlaufs desselben in der Sichtachse der zweiten Kamera (C2), während sich der Spargel immer noch im Sichtfeld der ersten Kamera (C1) befindet und, ausgehend von diesen beiden Erfassungen, zum Steuern der Positionierung des Roboters derart, daß der genannten Spargel sich in der Sichtachse der zweiten Kamera (C2) befindet, und zum Bestimmen der Raumkoordinaten des Spargels, um entsprechende Signale an Steuermotoren (My, Mz) der Horizontal- und Vertikaltranslationen des Aufnahmegreifers (10) zu übertragen, damit der Spargel extrahiert wird und danach der Roboter mit vorgegebener Geschwindigkeit wieder in Gang gesetzt wird.

6. Roboter nach Anspruch 5, dadurch gekennzeichnet, daß das Mikroprozessorsystem einen Schaltkreis (23) für die Berechnung der Bewegung des Roboters umfaßt, angeschlossen an jede der beiden Kameras (C1 und C2) über einen Umform- und Verarbeitungsschaltkreis für die von der zugeordneten Kamera aufgefangenen Bilder, welcher Berechnungsschaltkreis (23) einerseits den Motor (Mz) für die Bewegung des Roboters steuert und andererseits die Motoren (My, Mz) für die Horizontal- und Vertikaltranslation des Aufnahmegreifers (10) über einen Schaltkreis (24) zum Berechnen der Horizontal- und Vertikalkoordinaten des Spargels sowie einen Schaltkreis (25) zum Steuern der genannten Translationsmotoren.

7. Roboter nach einem der Ansprüche 1 bis 6, dadurch gekennzeichnet, daß der Aufnahmegreifer (10) am unteren Ende einer vertikalen Zahnstange (11) befestigt ist, die von einem Motor angetrieben wird, wobei die Baugruppe von einem Schlitten (12) getragen ist, der senkrecht zur Bewegungsrichtung (X) des Roboters bewegt wird.

8. Roboter nach einem der Ansprüche 1 bis 7, dadurch gekennzeichnet, daß das genannten Auflichtbeleuchtungssystem (6) von einem transluziden Schirm (8) gebildet ist, der senkrecht zur Achse des Kamerasystems (5) angeordnet ist, sowie von Beleuchtungsmitteln (9), die hinter dem Schirm angeordnet sind.

9. Roboter nach einem der Ansprüche 1 bis 8, dadurch gekennzeichnet, daß die Mittel zum Bewegen des Roboters von zwei Elektromotoren (M1, M2) gebildet sind, deren jeder eines von zwei Vorderrädern (4a, 4b) antreibt, und daß er ein System der Selbststeuerung längs des Hügels (1) umfaßt, gebildet von mindestens zwei Ultraschallsensoren (Ca1, Ca2), die beidseits des Hügels gegenüber jeweils einer Flanke desselben angeordnet sind, welche Sensoren ausgebildet sind zum Messen des Abstandes zwischen ihnen und dem Hügel und zum entsprechenden Steuern der jeweiligen Geschwindigkeit jedes der genannten Motoren (M1, M2) über das genannte Mikroprozessorsystem (MP), um den Roboter in korrekter Ausfluchtung mit dem Hügel zu halten.

10. Roboter nach Anspruch 9, dadurch gekennzeichnet, daß er vier Ultraschallsensoren (Ca1 bis Ca4) umfaßt, die im wesentlichen am Ort der vier Räder (4a bis 4d) der Maschine angeordnet sind.

11. Roboter nach einem der Ansprüche 1 bis 10, dadurch gekennzeichnet, daß er einen magnetischen oder analogen Kompass umfaßt, der es ermöglicht, die Orientierung der Maschine relativ zur Achse des Spargelhügels (1) zu kennen und über das genannten Mikroprozessorsystem die Drehung der Maschine um 180° am Ende eines Hügels zu steuern, um sie auf das Ende de folgenden Hügels auszufluchten.

**Claims**

1. An asparagus-picking robot of the type comprising a moving chassis (3), means for shifting and guiding the chassis parallel to the mounds of earth (1) with asparagus plants, a device for gripping the asparagus which can be moved with vertical translation and horizontal translation orthogonally to the direction of travel of the chassis and a device for detecting the asparagus to be picked and for controlling the positioning of the gripping device, said robot being characterised in that the detecting and control device comprises a camera system (5) and a system (6) for back lighting the mound of earth (1) during operation, the two systems being borne by the chassis and being arranged substantially in a horizontal plane at the level of the top of the mound on either side thereof, and a microprocessor system capable of controlling, from the images of an asparagus (2) detected by the camera system (5), on the one hand the travel of the chassis (3) parallel to the mound (1) and on the other hand the horizontal translations Y and vertical translations Z of gripping tongs (10) with the object of bringing the gripping tongs into contact with the detected asparagus then extracting the asparagus from the soil and placing it in a container (13).

2. A robot according to claim 1, characterised in that the camera system (5) comprises a single camera C, the microprocessor system being responsible for detecting the presence and the passage of the image of the asparagus (2) detected by the camera C in two predetermined regions of the field of vision (18) of the camera, for determining the spatial coordinates of the asparagus (2) as a function of these two detections and for transmitting the resulting signals to the motor (Mx) controlling the travel of the robot and to the motors (My, Mz) controlling the horizontal and vertical translations of the gripping tongs (10) with the object of stopping the robot at right angles to the asparagus, extracting the asparagus then setting the robot into operation again at a predetermined speed.

3. A robot according to claim 2, characterised in that said microprocessor system comprises a synchronizing pulse generator (14) connected to the camera (C), a first generator (16) and a second generator (17) of detecting windows (F1 and F2) in two regions of the field of vision (18) of the camera, the two generators being connected to said synchronizing generator, a first detector (19) and a second detector (20) detecting the presence of an image of the asparagus in the respective one or other of the two above-mentioned windows, the two detectors (19, 20) being connected to their respective window generator (16, 17) and to the camera (C) via a circuit (21, 22) for shaping and processing the images detected by the camera, a circuit (23) for calculating the travel of the robot receiving the output signals from the two above-mentioned detectors of presence (19, 20), said calculating circuit (23) controlling, on the one hand, the robot travel motor (Mx) and, on the other hand, the motors (My, Mz) controlling the horizontal and vertical translations of the gripping tongs (10) via a circuit (24) for calculating the horizontal and vertical coordinates of the asparagus (2) and a circuit (25) for controlling said translation motors.

4. A robot according to claim 3, characterised in that the first detecting window (F1) is positioned on the front edge, according to the direction of travel (X) of the robot, of the field of vision (18) of the camera (C), whereas the second window (F2) having the same characteristics as the first one, is positioned in the vertical axial plane (32) of said field of vision, the coordinates of said windows being defined by a calculating circuit (15) from the pulse generator (14).

5. A robot according to claim 1, characterised in that the camera system (5) comprises two cameras (C1, C2) arranged side by side, the first camera (C1) being a camera having a large field but low persistence and the second camera (C2) being a narrow field camera, the microprocessor system being responsible for detecting the penetration of the asparagus into the field of vision of the first camera (C1) then the passage of the asparagus into the axis of vision of the second camera (C2) while the asparagus is still in the field of vision of said first camera (C1) and, on the basis of these two detections, for controlling the positioning of the robot such that said asparagus is in the axis of vision of the second camera (C2) and for determining the spatial coordinates of the asparagus with the object of transmitting the resultant signals to the motors (My, Mz) for controlling the horizontal and vertical translations of the gripping tongs (10) so as to extract the asparagus then to set the robot into operation again at a predetermined speed.

6. A robot according to claim 5, characterised in that the microprocessor system comprises a circuit (23) for calculating the travel of the robot, which is connected to each of the two cameras (C1 and C2) via a circuit for shaping and processing the images detected by the associated camera, said calculating circuit (23) controlling, on the one hand, the motor (Mx) for robot travel and, on the other hand, the motors (My, Mz) for the horizontal and vertical translations of the gripping tongs (10) via a circuit (24) for calculating the horizontal and vertical coordinates of the asparagus and a circuit (25) for controlling said translation motors.

7. A robot according to one of claims 1 to 6, characterised in that the gripping tongs (10) are fixed at the lower end of a vertical rack (11) moved by a motor, the assembly being borne by a carriage (12) moved perpendicularly to the direction of travel (X) of the robot.

8. A robot according to one of claims 1 to 7, characterised in that said back lighting system (6) is constituted by a translucent screen (8) perpendicular to the axis of the camera system (5) and a lighting means (9) arranged behind the screen.

9. A robot according to one of claims 1 to 8, characterised in that the means for robot travel is constituted by two electric motors (M1, M2) each driving one of the two front wheels (4a, 4b) and in that it comprises a system for automatic tracking along the mound (1) constituted by at least two ultrasonic sensors (Ca1, Ca2) arranged on either side of the mound (1) facing each of the flanks thereof, said sensors being responsible for measuring the distance separating them from the mound and for consequently controlling, via said microprocessor system (Mb), the respective speed of each of said motors (M1, M2) with the object of keeping the robot correctly aligned with the mound.

10. A robot according to claim 9, characterised in that it comprises four ultrasonic sensors (Ca1 to Ca4) arranged substantially to the right of the four wheels (4a to 4d) of the machine.

11. A robot according to one of claims 1 to 10, characterised in that it comprises a magnetic compass or the like for detecting the orientation of the machine relative to the axis of the mound (1) of asparagus and for controlling, via said microprocessor system, the 180° rotation of the machine at the end of a mound with the object of aligning itself with the end of the following mound.

FIG.1

FIG.2

FIG.3

FIG.5

FIG.6

FIG.4

FIG.7

FIG.8    FIG. 9

FIG.10

4

FIG 11

FIG 12

FIG 13